# EUROPÄISCHE PATENTSCHRIFT

(11) **EP 1 932 778 B1**
(45) Veröffentlichungstag und Bekanntmachung des Hinweises auf die Patenterteilung: **01.06.2011**
(21) Anmeldenummer: 07023834.0
(22) Anmeldetag: 10.12.2007
(51) Int. Cl.: B65G 1/02, B65G 1/04, B65D 21/08

(54) **Lagervorrichtung**
Storage device
Dispositif de stockage

(30) Priorität: 11.12.2006 DE 202006018793 U
(43) Veröffentlichungstag der Anmeldung: 18.06.2008
(73) Patentinhaber: Kardex Produktion Deutschland GmbH, 86476 Neuburg/Kammel (DE)
(72) Erfinder: Preschke, Harald, 89269 Vöhringen (DE)
(74) Vertreter: Fiener, Josef

(56) Entgegenhaltungen:
- DE-A1- 10 349 469
- DE-U1- 8 326 738
- DE-U1- 20 305 147
- JP-A- 2006 204 318

## Beschreibung

Die Erfindung betrifft eine Lagervorrichtung in Form eines mechanischen Schrankes mit einer Vielzahl von Lagergutträgern, die jeweils einen Trägerrahmen und einen Boden aufweisen, gemäß dem Oberbegriff des Anspruchs 1.

Eine derartige Lagervorrichtung ist aus der US-A-5,810,540 bekannt. Hierbei ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden rechten bzw. linken Stapelsäulen ist eine Zubringer-Plattform in Höhenrichtung verfahrbar, so dass einzelne Lagergutträger aus dem Regalrahmen entnommen werden können und zur Auslagerung einer Öffnung zugeführt werden können. Bei dem genannten Stand der Technik sind die Lagergutträger grundsätzlich kistenartig aufgebaut, so dass sich das Bodenblech bei schwerer Beladung durchbiegen kann. Zudem kann es dadurch zu Verwindungen des Trägerrahmens kommen, so dass dies bei der Einlagerung in die Regalrahmen zu Problemen führen kann. Das Dokument DE-U-203 05 147 offenbart eine Lagervorrichtung gemäß dem Oberbegriff des Anspruchs 1.

Demzufolge liegt der Erfindung die Aufgabe zugrunde, eine Lagervorrichtung zu schaffen, deren Lagergutträger eine einfache und kompakte Bauweise bei erhöhter Stabilität bieten. Zudem soll damit je nach geforderter Belastbarkeit der Lagergutträger eine flexible Fertigung erzielt werden.

Diese Aufgabe wird gelöst durch eine Lagervorrichtung gemäß den Merkmalen des Patentanspruches 1.

Durch die Aufteilung des Bodens in eine Vielzahl von vorkonfigurierten Modulteilen können unterschiedliche Abmessungen des Lagergutträgers auf einfache Weise und mit vorhersehbarer Statik verwirklicht werden. Somit kann bei Kundenanfragen auch für Sonderabmessungen und zum Teil sehr hohen Zuladungen, für welche nur kleine Stückzahlen in Betracht kommen, der Lagergutträger in großer Variabilität modular und mit vorgeprüfter Stabilität aufgebaut werden. Der Trägerrahmen besteht hierbei aus Vorder- und Hinterkantprofilen in diversen Ausführungen, modularen Bodenteilen in diversen Ausführungen und Seitenteile in diversen Ausführungen. Letztere können auch in der Variante für eine Gleitlagerung bzw. für eine Rollenlagerung gestaltet werden. All diesen Varianten ist gemeinsam, dass sich die obere Anlagekante der Modulteile am Vorderkantprofil abstützt, so dass beim Ein- oder Auslagern ein Verdrehen dieses Profils zuverlässig verhindert wird. Diese Anlagekante befindet sich auf etwa 30% der Höhe des Trägerrahmens, so dass insbesondere das Vorderkantprofil sicher abgestützt wird. Auch die Modulteile an sich weisen eine hohe Stabilität auf, da sie mit Vertikalschenkeln (entsprechend der vorstehenden Höhe) und Horizontalschenkeln, bevorzugt in Art eines liegenden C-Profils abgekantet sind. Die relativ kurzen Horizontaschenkel dienen dabei auch der Verbindung mit dem Trägerrahmen, insbesondere durch einfaches Vernieten.

Ein weiterer Vorteil liegt darin, dass für jedes Bauteil Verformungswerte vorab ermittelt werden können, und somit je nach Anforderung der Aufbau eines Lagergutträgers sicher vorherbestimmt werden kann. Dies spart im Angebotsbereich Kosten, da nicht immer neue Trägervarianten entworfen werden müssen. Zudem müssen bei diesem Aufbau am Trägerrahmen keine Schweißverbindungen vorgenommen werden. So können einfache verzinkte Bleche verwendet werden, so dass eine Lackierung entfällt. Auch Edelstahlteile sind so mit wenig Produktionsaufwand herstellbar.

Durch die Abstützung der Modulteile des Bodens am Trägerrahmen wird die Durchbiegung des Bodens auch unter hohen Lasten reduziert. Damit kann die Stabilität der Lagergutträger ohne zusätzliches Bauvolumen erheblich gesteigert werden. Von besonderem Vorteil ist die Anwendung solcher Lagergutträger in Lagervorrichtungen mit einer vertikal beweglichen Zubringer-Plattform, da dort meist eine Vielzahl in den Regalrahmen eingelagert wird. Zudem ergibt sich auch bei langer Lagerzeit von unter Umständen mehreren Jahren keine Zunahme der Durchbiegung des Bodens (Kriecheffekt), da durch die Abstützung eine optimale Kraftableitung auf den Trägerrahmen und die Regalrahmen der Lagervorrichtung erzielt wird.

Weitere vorteilhafte Ausgestaltungen sind Gegenstand der Unteransprüche.

Nachfolgend wird ein Ausführungsbeispiel der Lagervorrichtung anhand der Zeichnung näher erläutert und beschrieben. Hierbei zeigen:
- Fig. 1: eine Perspektivdarstellung einer Lagervorrichtung;
- Fig. 2: eine Schnittdarstellung der Lagervorrichtung gemäß Fig. 1;
- Fig. 3: eine Darstellung eines Lagergutträgers in Perspektivansicht; und
- Fig. 4: eine vergrößerte Schnittansicht gemäß dem Pfeil B in Fig. 3 mit einer nochmals vergrößerten Detaildarstellung des eingekreisten Bereichs.

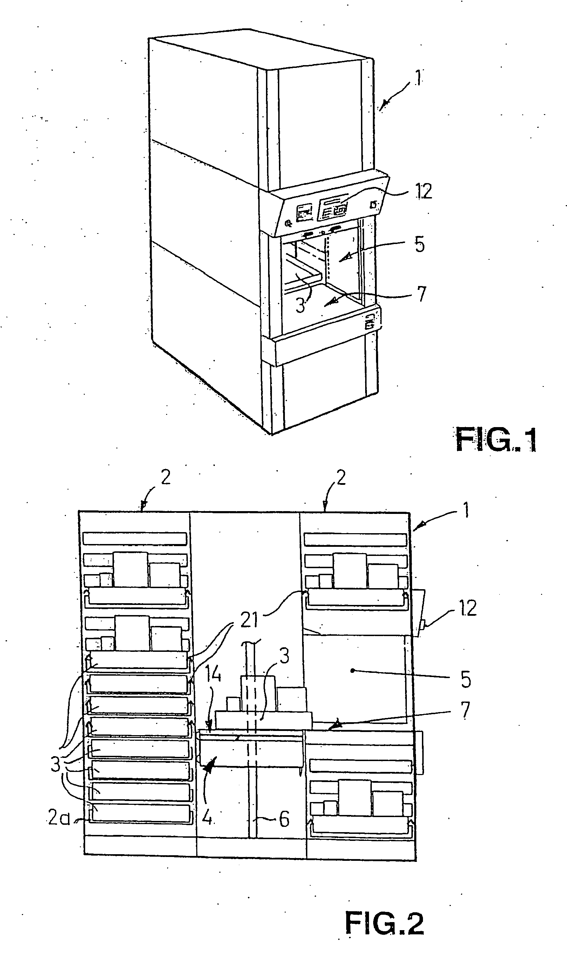

In Fig. 1 ist eine Perspektivdarstellung einer Lagervorrichtung 1 in Form eines mechanischen Schrankes gezeigt, der im wesentlichen aus zwei hintereinander angeordneten Regalrahmen 2 besteht (vgl. auch Fig. 2), in denen eine Vielzahl von relativ flachen, kassettenartigen Lagergutträgern 3 auf seitlichen Auflagewinkeln 2a einlagerbar sind. Die Lagergutträger 3 werden hierbei durch eine Zubringer-Plattform 4 von einer Ein-/Auslageröffnung 5 abgeholt und zu dem jeweiligen Fach in dem Regalrahmen 2 transportiert. Die Auslagerung erfolgt in umgekehrter Weise, indem der jeweilige Lagergutträger 3 von entsprechenden Auflagewinkeln 2a an einem vorbestimmten Platz des Regalrahmens 2 gezogen wird, von der Zubringer-Plattform 4 dann auf die Ein-/Auslagerebene 7 der Ein-/Auslageröffnung 5 bewegt wird und dann in diese ausgeschoben wird. Die Steuerung der Einlagerung bzw. Auslagerung erfolgt im allgemeinen dabei mittels einer Antriebsvorrichtung prozessorgesteuert, wobei das Steuerteil beispielsweise hinter einem hier schematisch dargestellten Bedienfeld 12 angebracht ist, mit dem bestimmte Fachplätze in dem Regalrahmen 2 angewählt werden können. In der Ein-/Auslageröffnung 5 kann dabei auch ein Höhensensor vorgesehen sein, der die Höhe des einzulagernden Lagergutträgers 3 erfasst und diesem dann ein entsprechender Platz im Regalrahmen 2 zugewiesen wird. Hierdurch wird die Lagerplatznutzung in der Lagervorrichtung 1 erhöht.

Zur Ein-/Auslagerung der jeweiligen Lagergutträger 3 sind an der Oberseite der Zubringer-Plattform 4 z. B. Kettenantriebe 14 vorgesehen, mit denen die jeweiligen Lagergutträger 3 aus der Einlageröffnung 5 übernommen werden können bzw. auf diese ausgeschoben werden können. Um hierbei mit dem jeweiligen Lagergutträger 3 in Eingriff gehen zu können, ist beispielsweise ein vorderes bzw. rückseitiges Eingriffsprofil 21 (nur an einigen Lagergutträgern 3 durch je einen Haken angedeutet) für die Kettenantriebe 14 vorgesehen, wie dies in Fig. 2 als Schnittdarstellung der Lagereinrichtung 1 gemäß Fig. 1 gezeigt ist. Hierbei sind insbesondere die Anordnung der beiden Regalrahmen 2 und die Zubringer-Plattform 4 ersichtlich, mit der nach dem Einschieben eines (hier mit ggf. relativ schweren Maschinenteilen beladenen) Lagergutträgers 3 von Hand, mittels Roboter oder eines sonstigen Bediengerätes, die Lagergutträger 3 an den zugewiesenen Lagerplatz im Regalrahmen 2 bewegbar sind. Dies erfolgt durch Höhenbewegung der Zubringer-Plattform 4 z. B. mittels eines geschlossenen Seilstranges. Die Plattform wird dabei in Höhenrichtung an einer Führungsschiene 6 geführt.

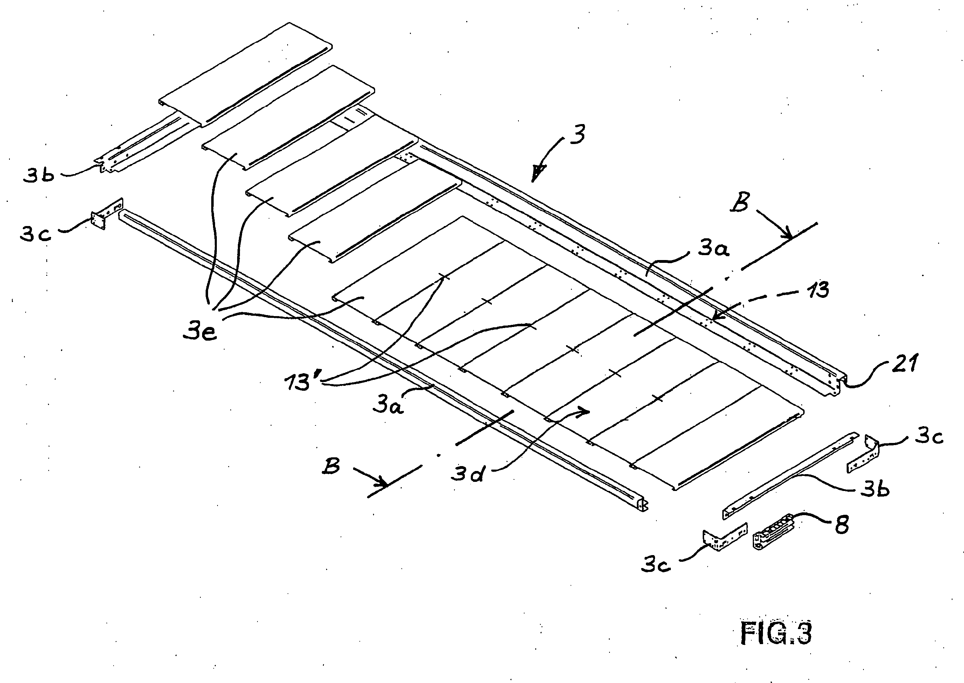

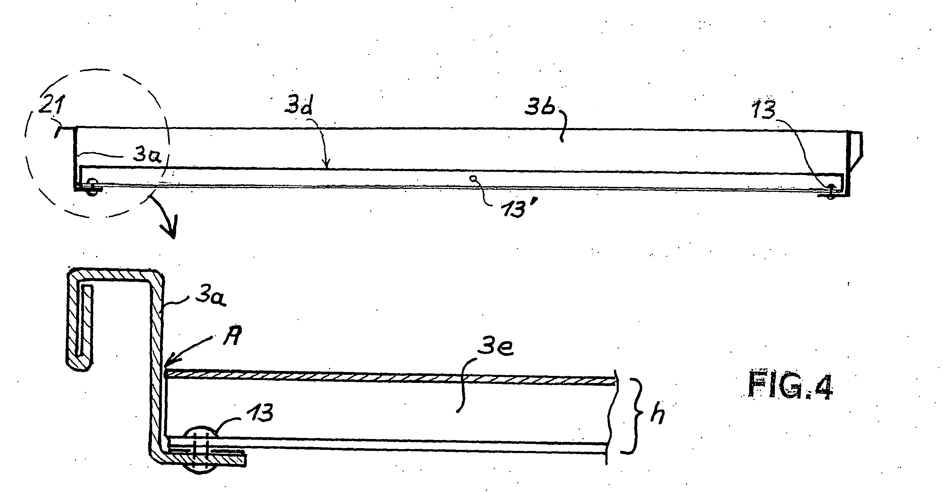

In Fig. 3 ist einer der tablarartigen Lagergutträger 3 vergrößert gezeigt, wobei der hier linke Bereich zur Verdeutlichung des Aufbaus in Explosionsdarstellung gezeichnet ist. An den mit Seitenrahmen 3b versehenen Seitenflächen, die in die Auflagewinkel 2a eingreifen oder sich darauf abstützen, sind, wie in Fig. 3 schematisch dargestellt, Gleit- oder Rollenführungen 8 austauschbar befestigt. Die Seitenrahmen 3b des Lagergutträgers 3 sind über Winkelverbinder 3c mit zwei Längsrahmen 3a verbunden, um so den Trägerrahmen 3a, 3b zu bilden, in den ein Boden 3d eingesetzt und dieser mit den erwähnten Seitenrahmen 3b und/oder hier den Längsrahmen 3a verbunden wird. Die Verbindung des Bodens 3d mit dem Trägerrahmen 3a/3b erfolgt hier durch Nietverbindungen 13, wie durch das Lochbild im Längsrahmen 3a (Vorderkantenprofil) angedeutet und in Fig. 4 näher dargestellt ist. Dadurch ergibt sich eine besonders stabile Abstützung des Bodens 3d des Lagergutträgers 3 und eine optimale Krafteinleitung in den Rahmen, so dass auch bei hohen Kräften, beispielsweise bei schweren Lagergütem, eine sichere Abstützung gegeben ist.

Der Boden 3d ist hierbei aus einer Vielzahl gleichartiger Modulteile 3e gebildet, die mehrfach abgekantet sind, also neben dem eigentlichen Bodenbereich jeweils zwei seitliche Vertikalschenkel und zwei kurze Horizontalschenkel aufweisen. Die Vertikalschenkel bestimmen die Höhe h (vgl. Fig. 4), in der die stirnseitige Kante des jeweiligen Modulteils 3e am Längsrahmen 3a anliegt (Anlagepunkt oder -kante A in Fig. 4), während die kurzen Horizontalschenkel an der Unterseite des Modulteils 3e der Stabilisierung und Befestigung am Längsrahmen 3a über die Nieten 13 dienen. Die Höhe h ist je nach geforderter Belastbarkeit weitgehend frei wählbar, sollte jedoch im Allgemeinen etwa 10 bis 40% der Höhe des Trägerrahmens 3a/3b entsprechen.

In Fig. 4 ist eine Schnittansicht gemäß dem Pfeil B in Fig. 3 dargestellt, wobei die Schnittlinie etwa mittig durch ein Modulteil 3e geführt ist, um die Befestigung des Bodens 3d am Trägerrahmen 3a, 3b genauer zu zeigen. Die Modulteile 3e berühren stirnseitig mit der Anlagekante A den Längsträger 3a (genauer dessen aufrechten Schenkel), da diese Bauteile durch Nieten 13 fest verbunden sind, so dass im Verbund mit dem übrigen Trägerrahmen dessen Verwindung beim Ein- oder Auslagern erheblich reduziert wird. Zudem ergibt sich durch mehrfache Abkantung der Modulteile 3e eine hohe Eigenstabilität. Diese kann noch gesteigert werden, wenn die Modulteile 3e in ihrem Mittelbereich entlang der Seitenkanten ( = Vertikalschenkel) mit Nieten oder Schrauben verbunden sind, wie dies mit dem Bezugszeichen 13' angedeutet ist. Die Modulteile 3e weisen dabei einen nach unten offenen Querschnitt in Art eines liegenden C-Profils auf, wobei die kurzen Horizontalschenkel auch der Aufnahme der Nieten 13 dienen. Es sind jedoch auch andere gekröpfte Winkelprofile denkbar, sofern der untere Schenkel für die Nieten 13 mit dem unteren Schenkel des Längsrahmens 3a verbunden werden kann.

Wesentlich ist hierbei, dass die Modulteile 3e und die Teile des Trägerrahmens 3a, 3b mit verschiedenen Dimensionen mit definierter Statik vorgefertigt und vorgeprüft werden können. Durch dieses Baukastensystem kann damit ein großer Bereich verschiedener Belastungen des Bodens 3d in einfacher und sicherer Weise abgedeckt werden, wobei selbst schwere Lasten stabil abgestützt werden können.

## Patentansprüche

1. Lagervorrichtung in Form eines mechanischen Schrankes mit einer Vielzahl von Lagergutträgern (3), die jeweils einen Trägerrahmen (3a, 3b) und einen Boden (3d) aufweisen, wobei der Boden (3d) des Lagergutträgers (3) an dem Trägerrahmen (3a, 3b) befestigt ist, wobei der Boden (3d) aus einer Vielzahl von Modulteilen (3e) gebildet ist, die mehrfach abgekantet sind,
**dadurch gekennzeichnet, dass** die Modulteile (3e), in einer vorbestimmten Höhe (h) an einer Anlagekante (A) am Trägerrahmen (3a, 3b) anliegen, wobei die Höhe (h) der Modulteile (3e) zwischen 10% und 40%, insbesondere etwa 30% der Höhe des Trägerrahmens (3a, 3b) beträgt.

2. Lagervorrichtung nach Anspruch 1, **dadurch gekennzeichnet, dass** die Modulteile (3e) mit dem Trägerrahmen (3a, 3b) durch Nieten (13) verbunden sind.

3. Lagervorrichtung nach Anspruch 1 oder 2, **dadurch gekennzeichnet, dass** die Modulteile (3e) miteinander durch Schraub-, Schweiß- oder Nietverbindungen (13') entlang ihrer Seitenkanten verbunden sind, insbesondere in ihrem Mittelbereich.

4. Lagervorrichtung nach einem der Ansprüche 1 bis 3, **dadurch gekennzeichnet, dass** jeweils Gleit- oder Rollenführungen (8) seitlich am Lagergutträger (3) angeordnet sind.

5. Lagervorrichtung nach einem der Ansprüche 1 bis 4, **dadurch gekennzeichnet, dass** der Querschnitt der Modulteile (3e) als ein nach unten offenes C-Profil ausgebildet ist.

6. Lagervorrichtung nach einem der Ansprüche 1 bis 5, **dadurch gekennzeichnet, dass** die Modulteile (3e) und/oder der Trägerrahmen (3a, 3b) aus verzinktem Blech hergestellt sind/ist.

## Claims

1. Storage device in form of a mechanical cabinet with a multiplicity of storage carriers (3), each having a support frame (3a, 3b) and a bottom (3d), wherein the bottom (3d) of the storage carrier (3) is fixed to the support frame (3a, 3b) and wherein the bottom (3d) is formed of a multiplicity of module parts (3e) being multiple-bended,
**characterised in that**
the module parts (3e) rest at a predetermined height (h) to a contact edge (A) at the support frame (3a, 3b), wherein the height (h) of the module parts (3e) amounts to 10% up to 40%, preferably about 30% of the height of the support frame (3a, 3b).

2. Storage device according to claim 1, **characterised in that** the module parts (3e) are connected to the support frame (3a, 3b) by rivets (13).

3. Storage device according to claim 1 or 2, **characterised in that** the module parts (3e) are connected to each other by screwing, welding or rivet joints (13') along their side edges, in particular in their central region.

4. Storage device according to one of claims 1 to 3, **characterised in that** sliding or roller aprons (8) are laterally arranged at the storage carriers (3), each.

5. Storage device according to one of claims 1 to 4, **characterised in that** the cross section of the module parts (3e) is formed as downwardly open C-profile.

6. Storage device according to one of claims 1 to 5, **characterised in that** the module parts (3e) and/or the support frame (3a, 3b) is/are made of galvanized sheet.

## Revendications

1. Dispositif de stockage sous la forme d'une armoire mécanique avec une pluralité de supports (3) de produit stocké qui présentent chacun un cadre de support (3a, 3b) et un fond (3d), sachant que le fond (3d) du support (3) de produit stocké est fixé sur le cadre de support (3a, 3b), sachant que le fond (3d) est constitué d'une pluralité d'éléments modulaires (3e) qui sont plusieurs fois repliés,
**caractérisé en ce que** les éléments modulaire (3e) s'appliquent à une hauteur prédéfinie (h) contre un bord d'application (A) sur le cadre de support (3a, 3b), sachant que la hauteur (h) des éléments modulaires (3e) est comprise entre 10% et 40%, notamment est égale à environ 30% de la hauteur du cadre de support (3a, 3b).

2. Dispositif de stockage selon la revendication 1, **caractérisé en ce que** les éléments modulaires (3e) sont assemblés au cadre de support (3a, 3b) par des rivets (13).

3. Dispositif de stockage selon la revendication 1 ou 2, **caractérisé en ce que** les éléments modulaires (3e) sont assemblés entre eux le long de leurs bords latéraux, notamment dans leur région centrale, par des assemblages vissés, soudés ou rivetés (13').

4. Dispositif de stockage selon l'une des revendications 1 à 3, **caractérisé en ce que** des guidages (8) respectifs à glissement ou à rouleaux sont disposés sur les côtés du support (3) de produit stocké.

5. Dispositif de stockage selon l'une des revendications 1 à 4, **caractérisé en ce que** la section des éléments modulaires (3e) est réalisée sous la forme d'un profilé en C ouvert vers le bas.

6. Dispositif de stockage selon l'une des revendications 1 à 5, **caractérisé en ce que** les éléments modulaires (3e) et/ou le cadre de support (3a, 3b) sont réalisés en tôle galvanisée.
